# EUROPEAN PATENT APPLICATION

(11) **EP 1 927 582 A1**
(43) Date of publication of application: **04.06.2008**
(21) Application number: 06123614.7
(22) Date of filing: 07.11.2006
(51) Int. Cl.: C04B 41/83, C04B 41/89

(54) **Coatings for ceramic substrates**

(71) Applicant: CYTEC SURFACE SPECIALTIES, S.A., 1070 Bruxelles (BE)
(72) Inventor: Moens, Luc, 1640 Sint- Genesius- Rode (BE)
(74) Representative: Destryker, Elise Martine

(57) **Abstract**

The invention relates to process for making highly mechanical and chemical resistant ceramic substrates, especially tiles, by coating said substrates with at least one layer obtained from a powder coating composition comprising a least one acrylic copolymer comprising carboxyl-, hydroxyl- and/or glycidyl-functional groups and at least one hardener having functional groups reactable with the acrylic copolymers' functional groups and optionally at least one primer layer obtained from a polyester powder coating composition comprising at least one carboxyl- and/or hydroxyl-functional polyester and at least one hardener having functional groups reactable with the polyesters' functional groups.

## Description

The invention relates to a process for coating ceramic substrates with thermosetting coating compositions and to the ceramic substrates thereby obtainable.

Usually ceramic substrates such as tiles or sanitary fittings are coated with enamels in order to be highly decorative as well as scratch-, wear- and solvent resistant. However this enamel technology is high energy consuming.

US 4,143,181 relates to a method of applying a coating composed of a primer and a topcoat on glass substrates. The primer, intended to protect the substrate from damage upon impact, is applied as a solution comprising a thermosetting binder composed of a hydroxyl functional polyester; the topcoat serves for improving resistance to caustic soda and also comprises a thermosetting binder composed of a hydroxyl functional polyester.

DE 19748927 relates to a method for obtaining a scratch resistant decorative or functional coating obtained from a thermosetting composition selected from polyester and polyurethane resins on heat resistant non metallic substrates. Hereto, the substrate is heated to a temperature which is above the softening temperature of the coating to apply and subsequently the powder is applied to the heated substrate without the use of electrostatic field, the substrate itself being electrically insulated. The substrate then is transferred to an oven for curing the thermosetting powder. A two-coat system is illustrated: a first black coating, a polyester-TGIC system, is applied at a thickness of 200 micron and cured for 10 minutes. Subsequently a second clear layer of the same polyester-TGIC system, containing brass flakes is applied and cured for another 10 minutes in order to obtain a highly decorative coating.

US 6982137 relates to a method of forming color images on tiles or glass wherein the substrate is first coated with a clear powder polymer coating cured at 80 to 95 %, then a xerographically color image is applied thereto and finally another layer of the same polymer is applied thereto and the system is heated to achieve complete cure.

These coatings do not permit to obtain a high decorative finish proving also outstanding mechanical and chemical performances such as scratch resistance and chemical resistance.

We have now found coatings which do not present the drawbacks of those described before.

Therefore the present invention relates to a process for coating ceramic substrates which process comprises applying a powder coating composition comprising at least one acrylic copolymer comprising carboxyl-, hydroxyl- and/or glycidyl-functional groups and at least one hardener having functional groups reactable with the acrylic copolymers' functional groups to the substrate and curing the applied composition.

By ceramic substrate is meant to understand in the present invention a product manufactured by the action of heat on earthy raw materials in which silicon with its oxide and complex compounds known as silicates occupy a predominant position. The ceramic substrate is preferably a structural clay product, such as a brick, tile, terra cotta or a glazed architectural brick. Ceramic tiles are preferred.

The powder coating composition used in the present invention is presented in the form of a fine powder which once applied on the substrate and upon heating forms a coating on the ceramic substrate during which process at least part of the functional groups from the acrylic copolymer react with at least part of the functional groups of the hardener.

The acrylic copolymers used in the present invention are generally prepared from (meth)acrylated monomers and optionally other ethylenically unsaturated monomers, such as vinylic compounds . In the present invention the term (meth)acrylate is used to designate acrylates, methacrylates as well as mixtures thereof. Useful monomers include methyl(meth)acrylate, ethyl(meth)acrylate, n-propyl(meth)acrylate, isopropyl(meth)acrylate n-butyl(meth)acrylate, isobutyl(meth)acrylate, tert.-butyl(meth)acrylate, n-amyl (meth)acrylate, isoamyl(meth)acrylate, allyl(meth)acrylate, 2-ethylbutyl (meth)acrylate, 2-ethylhexyl (meth)acrylate, stearyl(meth)acrylate, tridecyl(meth)acrylate, cyclohexyl(meth)acrylate, n-hexyl(meth)acrylate, benzyl(meth)acrylate, phenyl(meth) acrylate, isobornyl(meth)acrylate, nonyl(meth)acrylate, hydroxyethyl(meth)acrylate, hydroxypropyl(meth)acrylate, hydroxylbutyl(meth)acrylate, cinnamym(meth)acrylate, crotyl(meth)acrylate, cyclohexyl(meth)acrylate, cyclopentyl(meth)acrylate, methallyl(meth)acrylate, n-octyl(meth)acrylate, 2-phenylethyl (meth)acrylate, phenyl (meth)acrylate, 1,4-butandiol mono(meth)acrylate, the esters of methacrylic acid, maleic acid, maleic anhydride, itaconic acid, dimethylaminoethyl(meth)acrylate, diethylaminoethyl(meth)acrylate, styrene, α-methylstyrene, vinyltoluene, (meth)acrylonitrile, vinylacetate, vinylpropionate, acrylamide, methacrylamide, methylol(meth)acrylamide, vinylchloride, vinylidene fluoride ethylene, propylene, alkyl-substituted styrenes, chloro-substituted styrenes, C4-20 olefins and α-olefins, as well as mixtures thereof.

According to a first variant of the invention, an acrylic copolymer comprising carboxyl functional groups is used which is prepared by using from 1 to 50 mole %, preferably from 3 to 30 mole %, of a carboxylic acid group containing monomer relative to the total number of moles of monomers. The carboxylic acid group containing monomer is preferably selected from acrylic acid, methacrylic acid, crotonic acid, itaconic acid, fumaric acid, maleic acid, citraconic acid, the monoalkylesters of unsaturated dicarboxylic acids, and mixtures thereof.

The carboxyl functional acrylic copolymers used in the present invention preferably have an acid number from 15 to 100 mg KOH/g, more preferably from 30 to 70 mg KOH/g.

According to a second variant of the invention, an acrylic copolymer comprising hydroxyl functional groups is used which is prepared by using from 1 to 95 mole %, preferably 3 to 85 mole %, of a hydroxyl group containing monomer relative to the total number of moles of monomers. The hydroxyl group containing monomer is preferably selected from hydroxyethyl acrylate, hydroxyethyl methacrylate, 2- and 3-hydroxypropylacrylate, 2- and 3-hydroxypropylmethacrylate, 2-, 3- and 4-hydroxybutylacrylate, 2-, 3- and 4-hydroxybutylmethacrylate, polyethyleneglycol monomethacrylaat (n=5), polyethyleneglycol monomethacrylaat (n=10) and their mixtures.

The hydroxyl functional acrylic copolymers used in the present invention preferably have a hydroxyl number from 15 to 300 mg KOH/g, more preferably from 30 to 100 mg KOH/g.

According to a third variant of the invention, an acrylic copolymer comprising glycidyl functional groups is used which is prepared by using from 10 to 90 mole % , preferably from 15 to 70 mole%, of a glycidyl group containing monomer relative to the total number of moles of monomers. The glycidyl group containing monomer is preferably selected from glycidyl acrylate, glycidyl methacrylate, methyl glycidyl methacrylate, methyl glycidyl acrylate, 3,4-epoxycyclohexylmethyl(meth)acrylate, acrylic glycidyl ether and their mixtures.

The glycidyl functional acrylic copolymers used in the present invention preferably have an epoxy equivalent weight of 200 to 1000, more preferably from 350 to 800 gram of polymer per equivalent epoxy.

The acrylic copolymers are further advantagely characterized by a number averaged molecular weight ranging from 2000 to 20000, more preferable from 3000 to 10000.

The acrylic copolymers are further advantagely characterized by a glass transition temperature (Tg) from 40 to 100°C, measured by Differential Scanning Calorimetry (DSC), according to ASTM D3418 with a heating gradient of 20°C per minute.

The acrylic copolymers are further advantagely characterized by a (cone/plate) viscosity determined by the Brookfield method at 200°C ranging from 60 to 50000 mPa.s.

The acrylic copolymers are usually prepared by conventional polymerisation techniques, either in mass, in emulsion, or in solution in an organic solvent. The monomers are generally copolymerised in the presence of a free radical polymerisation initiator (benzoyl peroxide, dibutyl peroxide, azo-bis-isobutyronitrile, and the like) in an amount representing 0.1 to 4.0% by weight of the monomers.

To achieve a good control of the molecular weight and its distribution, a chain transfer agent, preferably of the mercaptane type, such as n-dodecylmercaptan, t-dodecanethiol, iso-octylmercaptane, or of the carbon halide type, such as carbon tetrabromide, bromotrichloromethane, etc., may also added in the course of the reaction. The chain transfer agent is generally used in amounts of up to 10% by weight of the monomers used in the copolymerisation.

When carboxyl functionalized acrylic copolymer is used in the present invention, the hardener comprising reactive groups reactable with the reactive groups of this acrylic copolymer is preferably selected from polyepoxy compounds, β-hydroxyalkylamide containing compounds and their mixtures. Preferred are polyepoxy compounds which are solid at room temperature and which contain at least two epoxy groups per molecule. Triglycidyl isocyanurates, such as the one marketed under the name Araldite®PT810, blends of diglycidyl terephthalate and triglycidyl trimellitates, such as those commercialized under the name of Araldite®PT910, and bisphenol A based epoxy resins such as those commercialized under the names GT 7004 or DER 692, are especially preferred. Acrylic copolymers containing glycidyl groups obtained from glycidyl methacrylate and/or glycidyl acrylate and another (meth)acrylic monomer and, optionally, an ethylenically mono-unsaturated monomer, such as described here above can also be used.

β-hydroxyalkylamides which contain at least one, preferably two, bis(β-hydroxyalkyl)amide groups are also especially preferred. Such compounds have for example been described in US-A-4727111.

The hardener described herein above is generally used in an amount from 0.25 to 1.40, preferably from 0.60 to 1.05, equivalent of carboxyl group present in the acrylic copolymer per equivalent of epoxy or β-hydroxyalkyl groups present in the harderner.

When the acrylic copolymer is hydroxyl functionalised, the hardener is preferably selected from blocked isocyanate crosslinking agents. Examples of blocked polyisocyanate crosslinking compounds include those which are based on isophorone diisocyanate blocked with ε-caprolactam, commercially available as Vestagon®B1530, Ruco®NI-2 and Cargill®2400 or toluene-2,4-diisocyanate blocked with ε-caprolactam, commercially available as Cargill®2450, and phenol-blocked hexamethylene diisocyanate.

Another class of blocked polyisocyanate compounds which may be employed are adducts of the 1,3-diazetidine-2,4-dione dimer of isophorone diisocyanate and a diol, wherein the ratio of NCO to OH-groups in the formation of the adduct is about 1:0.5 to 1:0.9, the mole ratio of diazetidinedione to diol is from 2:1 to 6:5, the content of free isocyanate groups in the adduct is not greater than 8 weight percent and the adduct has a molecular weight of about 500 to 4000 and a melting point of about 70 to 130°C. Such an adduct is commercially available under the name Vestagon®BF1540.

The crosslinking agent described herein above is generally used in an amount from 0.3 to 1.4, preferably from 0.7 to 1.2, equivalent of hydroxyl group present in the acrylic copolymer per equivalent of (blocked) isocyanate present in the hardener.

When the acrylic copolymer used in the present invention is glycidyl functionalised, the hardener is preferably selected from polycarboxylic acids and/or polyanhydrides.

Aliphatic polycarboxylic acids such as adipic acid, pimelic acid, suberic acid, azelaic acid, sebacic acid, undecanedioic acid, tridecanedioic acid, tetradecanedioic acid, pentadecanedioic acid, hexadecanedioic acid, octadecanedioic acid, eicosanedioic acid, 1,10-dodecanedioic acid (DDDA), docosanedioic acid or tetracosanedioic acid; cycloaliphatic polycarboxylic acids such as hexahydrophthalic acid, tetrahydrophthalic acid, 1,2-cyclohexanedicarboxylic acid, 1,3-cyclohexanedicarboxylic acid, 1,4-cyclohexanedicarboxylic acid and aromatic polycarboxylic acids such as isophthalic acid, phthalic acid and trimellitic acid, and any mixture thereof may be used.

The hardener described herein above is generally used in an amount from 0.5 to 2.0, preferably from 0.8 to 1.2, equivalent of glycidyl group present in the acrylic copolymer per equivalent of acid present in the acid group containing hardener.

The powder coating composition used in the present invention can besides the binder comprising one or more acrylic copolymer and one or more harderner as described here above, also contain other additives, fillers and/or pigments commonly used in powder coating compositions.

The powder coating composition comprising the acrylic copolymer is preferably used as a clear coat comprising no pigment or colorant.

The powder coating composition used in the process according to the invention preferably comprises from 30 to 97 % by weight of acrylic copolymer, from 3 to 50 % by weight of hardener, from 0 to 30 %, by weight of colorant and/or pigment and/or fillers and from 0 to 10 % by weight of other additives.

The components of the powder coating composition used in the process according to the invention may be mixed by dry blending in a mixer or blender, for example a drum mixer. The premix is then usually homogenised at temperatures ranging from 70 to 150°C in a single screw or double screw extruder. The extrudate, when cooled down, is grounded to a powder, preferably with a particle size ranging from 10 to 150 µm.

The powder coating composition can be applied to the ceramic substrate by any powder-coating process.

The powdered composition may be deposed on the ceramic substrate by use of a powder gun such as an electrostatic CORONA gun or TRIBO gun. On the other hand well known methods of powder deposition such as the fluidised bed technique can be used.

In a preferred embodiment of the process according to the invention the ceramic substrate, e.g. a tile, is first preheated to a temperature above the glass transition temperature of the powder coating composition, more preferably the substrate is preheated until it has a temperature of from 60 to 200 °C. The powder then is applied to the preheated substrate, preferably without the use of an electrical field and more preferably ensuring that the substrate is thermal and electrical insulated. After deposition the ceramic substrate containing the powder is generally heated to a temperature between 120 and 300°C for a curing time of from 1 to 60 minutes, causing the particles to flow and fuse together to form a smooth, uniform, continuous, uncratered coating on the substrate surface.

In the process according to the invention the substrate can be coated with more than one powder coating composition based on an acrylic copolymer as described here above. In this case, the coating compositions can be the same or different.

According to an embodiment of the present invention, the ceramic substrate is first mechanically polished before applying the powder coating composition as described here above.

The thickness of the layer comprising the powder coating composition based on the acrylic copolymer is generally from 25 to 250 µm after curing. The thickness of this layer is preferably at least 50 µm so that any defects in the surface of the substrate are rendered invisible.

The powder coating composition based on a acrylic copolymer can be applied directly on the ceramic substrate or, alternatively, the ceramic substrate can be coated first by one or more other primer coatings before applying the powder coating composition comprising the acrylic copolymer and the hardener.

According to a preferred embodiment of the present invention, the ceramic substrate is first coated with at least one primer layer, by applying to the ceramic substrate a polyester powder coating composition comprising at least one polyester having carboxyl-and/or hydroxyl-functional groups and at least one hardener having functional groups reactable with the polyester functional groups, partially or completely curing the applied composition, after which the substrate is top-coated with at least one powder coating composition comprising an acrylic copolymer and a hardener as described here above.

The polyesters used in the present invention are generally prepared from a polyacid component comprising from 70 to 100 mole % of aromatic polycarboxylic acids and/or their anhydrides and from 0 to 30 mole % of aliphatic or cycloaliphatic polyacids and/or their anhydrides, and from a polyol component comprising from 70 to 100 mole % of a branched chain aliphatic diol and from 0 to 30 mole % of other aliphatic or cycloaliphatic polyols.

The aromatic polycarboxylic acids are preferably terephthalic acid and isophthalic acid and mixtures thereof. The diols are preferably neopentyl glycol, propyleneglycol, 2-methyl-1,3 propanediol and 2-ethyl-2-butyl-1,3-propanediol and mixtures thereof.

The polyesters used in the present invention are preferably carboxyl functional polyesters preferably have an acid number from 15 to 100 mg KOH/g, more preferably from 30 to 70 mg KOH/g or hydroxyl functional polyesters having a hydroxyl number from 15 to 300 mg KOH/g, more preferably from 30 to 100 mg KOH/g.

The polyesters are preferably characterized by a number averaged molecular weight ranging from 600 to 15000 and more preferably from 1100 to 8500, measured by gel permeation chromatography (GPC).

The polyesters are preferably characterized by a glass transition temperature (Tg) from 35 to 80°C, measured by Differential Scanning Calorimetry according to ASTM D3418 with a heating gradient of 20°C per minute. The polyesters usuable in the process of the present invention more preferably present a Tg > 50 °C.

The polyesters are preferably characterized by a Brookfield (cone/plate) viscosity accordingly to ASTM D4287-88, ranging from 5 mPa.s, measured at 175°C, to 15000 mPa.s, measured at 200°C.

The polyesters used in the present invention are known in the prior art and have been described for being used in metal coating.

When a carboxyl functionalized polyester is used in the present invention, the hardener comprising reactive groups reactable with the reactive groups of this polyester is preferably selected from polyepoxy compounds, β-hydroxyalkylamide containing compounds and their mixtures as described here above. This hardener is generally used in an amount from 0.25 to 1.40, preferably from 0.60 to 1.05, equivalent of carboxyl group present in the polyester per equivalent of epoxy or β-hydroxyalkyl groups present in the harderner.

When a hydroxyl functionalized polyester is used the hardener is preferably selected from blocked isocyanate crosslinking agents such as described here above. This hardener is generally used in an amount from 0.3 to 1.4, preferably from 0.7 to 1.2, equivalent of hydroxyl group present in the polyester per equivalent of (blocked) isocyanate present in the hardener.

The powder coating composition used as primer layer in the present invention may comprise besides the binder comprising one or more polyester as described here above and one or more hardener, other additives, fillers and/or pigments commonly used in the powder coating compositions.

The powder coating composition preferably comprises at least one pigment and/or colorant.

The polyester powder coating composition used in the process according to the invention preferably comprises from 30 to 97 % by weight of polyester, from 3 to 50 % by weight of hardener, from 0 to 50 %, more preferably from 5 to 30 %, by weight of colorant and/or pigment and/or fillers and from 0 to 10 % by weight of other additives.

The components of the polyester powder coating composition used in the process according to the invention may be mixed by dry blending in a mixer or blender, for example a drum mixer. The premix is then usually homogenised at temperatures ranging from 70 to 150°C in a single screw or double screw extruder. The extrudate, when cooled down, is grounded to a powder, preferably with a particle size ranging from 10 to 150 µm.

The powder coating composition can be applied to the ceramic substrate by any powder-coating process. The powdered composition may be deposed on the ceramic substrate by use of a powder gun such as an electrostatic CORONA gun or TRIBO gun. On the other hand well known methods of powder deposition such as the fluidised bed technique can be used.

In a preferred embodiment of the process according to the invention the ceramic substrate, e.g. a tile, is first preheated to a temperature above the glass transition temperature of the polyester powder coating composition, more preferably the substrate is preheated until it has a temperature of from 60 to 200 °C. The polyester powder then is applied to the preheated substrate, preferably without the use of an electrical field and more preferably ensuring that the substrate is thermal and electrical insulated. After deposition the ceramic substrate containing the polyester powder is generally heated to a temperature between 120 and 300°C for a curing time of from 1 to 60 minutes, causing the particles to flow and fuse together to form a smooth, uniform, continuous, uncratered coating on the substrate surface. The polyester powder can be cured completely or only partially. Complete curing can be evaluated by any means suitable therefore, such as for example the resistance to MEK rubs as described here after. By partial curing is meant to designate a curing wherein at least part of the polyester powder composition can still be further cured in a later stage, particularly after having applied thereto the acrylic copolymer coating composition as described here above. The partial curing is advantageously done so that a MEK rub resistance of less than 200 is obtained.

In the process according to the invention the substrate can be coated with more than one polyester powder coating compositions as described here above. In this case, the coating compositions can be the same or different.

According to an embodiment of the present invention, the ceramic substrate is first mechanically polished before applying the polyester powder primer coating composition as described here above.

The thickness of the primer layer is generally from 25 to 250 µm after curing. The thickness of this layer is preferably at least 50 µm so that any defects in the surface of the substrate are rendered invisible.

The powder coating composition comprising the acrylic copolymer can be applied directly on the polyester powder primer coat or one or more intermediate layer may be applied between both layers. A color image or pattern may be applied between the primer layer and the topcoat layer. Alternatively this color image may be applied to the ceramic substrate by the method as described in US 6982137.

The process according to the invention permits to obtain ceramic substrates, especially ceramic tiles, which present a high decorative finish as well as outstanding mechanical and chemical performances, such as scratch resistance, stain resistance and chemical resistance. This makes these tiles suitable for being used in bathrooms, kitchens and other environments where high resistance is necessary.

The present invention therefore also relates to ceramic substrates, especially tiles, which can be obtained by the process as described here above.

The present invention further relates to ceramic substrates, especially tiles, comprising a least one coating layer obtained from a powder coating composition comprising at least one acrylic copolymer comprising carboxyl-, hydroxyl- and/or glycidyl-functional groups and at least one hardener having functional groups reactable with the acrylic copolymers' functional groups. Ceramic substrates, especially tiles, comprising a primer layer obtained from a polyester coating composition as described here above and a top layer obtained from a powder coating composition comprising a least one acrylic copolymer are preferred.

The examples which will follow illustrate the invention without limiting it.

Preparation Example 1: Synthesis of a carboxyl functional polyester PE

A mixture of 408.37 parts of neopentyl glycol was placed in a conventional four neck round bottom flask equipped with a stirrer, a distillation column connected to a water cooled condenser, an inlet for nitrogen and a thermometer attached to a thermoregulator.

The flask contents were heated, while stirring under nitrogen, to a temperature of circa 130°C at which point 532.59 parts of terephthalic acid, 59.18 parts of adipic acid and 2.00 parts of n-butyltintrioctoate were added. The heating was continued gradually to a temperature of 230°C. Water was distilled from the reactor from 180°C on. When distillation under atmospheric pressure stopped, a vacuum of 50 mm Hg was gradually applied. After three hours at 230°C and 50 mm Hg, a polyester having following characteristics was obtained: AN = 3 mg KOH/g, OHN = 42 mg KOH/g.

The reaction mixture was then cooled to 170-190°C followed by the addition of 119.18 parts of trimellitic anhydride. The temperature was maintained at 180°C until the reaction mixture became clear and a polyester having following characteristics was obtained : AN=72 mg KOH/g, OHN=6 mg KOH/g,Brfld175°C viscosity (cone/plate)=10.000 mPa.s; Tg (DSC, 20°/min)=58°C.

Preparation Example 2: Synthesis of a carboxyl functional acrylic copolymer A1

380.95 weight parts of n-butylacetate were brought in a reactor under mild nitrogen overflow conditions and heated to 125°C. Once the temperature reached 125 °C, 2 additions were carried out in parallel: addition I of the initiator, i.e. 47.62 parts tert-butylperoxybenzoate solubilised in another 95.23 parts of n-butylacetate, was done during 215 minutes. 5 minutes after the start of the addition I, addition M consisting of 95.24 parts styrene, 20.24 parts acrylic acid, 142.86 parts n-butylmethacrylate, 217.85 parts of methyl methacrylate was started and carried out during 180 minutes. After ending the addition I the reaction mixture was kept another 100 minutes at 125,0°C.

After ending the synthesis, the reaction mixture was heated for stripping at 175°C at a reduced pressure of 600 mbar during 30 minutes in a rotary evaporator. After these 30 minutes, the pressure was reduced to 50 mbar for another 90 minutes.

The obtained acrylic copolymer was characterised by an acid number 32.60 mg KOH/g; Mn (GPC; polystyrene cal.): 3037; Mw : 7929, disp. Mw/Mn : 2.6; Tg (DSC): 51 °C;

BKFD visc. in mPa.s at 175°C: 6530.

Preparation Example3: Synthesis of a hydroxyl functional acrylic copolymer A2

Preparation Example 2 was repeated except that 388.35 weight parts ofn-butylacetate were used and that addition M consisted of 145.63 parts styrene, 119.42 parts 2-hydroxyethyl methacrylate, 81.12 parts n-butylmethacrylate, 95.19 parts of methyl methacrylate and 44.08 parts isobutylmethacrylate and addition I consisted of 29.13 parts tert-butylperoxybenzoate solubilised in 97.09 parts of n-butylacetate.

The obtained acrylic copolymer was characterised by a hydroxyl number of 92.75 mg KOH/g; Mn (GPC; polystyrene cal.): 4974; Mw : 14078, disp. Mw/Mn : 2.8; Tg (DSC): 64 °C; BKFD visc. (cone 5; 200 RPM) in mPa.s at 200°C: 4250.

Preparation Example 4: Synthesis of a glydidyl functional acrylic copolymer A3

Preparation Example 2 was repeated except that addition M consisted of 382.77 weight parts of n-butylacetate as well as 95.69 parts styrene, 95.69 parts glycidylmethacrylate, 143.54 parts n-butylmethacrylate, 143.54 parts of methyl methacrylate and 28.71 parts of n-dodecylmercaptan and addition I consisted of 14.35 parts tert-butylperoxybenzoate solubilised in 95.69 parts ofn-butylacetate were used.

The obtained resin was characterised by an epoxy content of 823 g/eq.; Mn (GPC; polystyrene cal.): 4550; Mw : 13044, disp. Mw/Mn : 2.9; Tg (DSC): 45 °C; BKFD visc. (cone 5; 200 RPM) in mPa.s at 175°C: 6200.

The resins of Preparation Examples 1 to 4 then were formulated into a powder accordingly the formulations F1 to F4 :

The polyester resin of Preparaton example 1 was formulated into a black powder accordingly the formulation F1: 27.24 g of resin PE, 27.24 g of Araldite®GT 7004, 1.06 g of Carbon Black FW2, 21.60 g of Blanc Fix, 0.35 g of benzoin and 0.99 g of Modaflow®P6000 .

The acrylic copolymer resins of Preparation Examples 2 to 4 were formulated into respectively clear powder compositions F2 to F4.

| | Formulation 2 | Formulation 3 | Formulation 4 |
|---|---|---|---|
| | Quantity (g) | Quantity (g) | Quantity (g) |
| A1 (Prep.Ex 2) | 69.00 | | |
| A2 (Prep.Ex 3) | | 66.11 | |
| A3 (Prep.Ex 4) | | | 86.83 |
| Araldite®GT 7004 | 29.56 | | |
| Vestagon®B1530 | | 32.56 | |
| DDDA | | | 11.84 |
| Benzoin | 0.35 | 0.34 | 0.35 |
| Modaflow®P6000 | 0.99 | 0.99 | 0.99 |

### Examples 1 to 3

In a first set of applications the powder compositions of respectively Formulations F2 to F4 were applied on a polished tile. Hereto, the tile was preheated for 10 minutes at 200°C and then transferred to a wooden support in order to have electrical insulation.

Subsequently the powder composition was sprayed using a Gema Volstatic PCG1 without the application of an electrical field at a layer thickness of 100 micron. The tile then was transferred to a convection oven where it was cured for 30 minutes at 200°C

### Examples 4 to 6

A non-polished tile was preheated for 10 minutes at 200°C and then transferred to a wooden support in order to have electrical insulation. Subsequently the powder composition of Formulation 1 was sprayed using a Gema Volstatic PCG1 without the application of an electrical field at a layer thickness of 160 micron. The tile then was transferred to a convection oven where it was cured for 30 minutes at 200°C.

Subsequently the powder compositions of respectively Formulations 2 to 4 were sprayed using a Gema Volstatic PCG1 without the application of an electrical field at a layer thickness of 80 micron on the black coated tile obtained immediately after curing of the first coating, the tile still standing at a temperature of about 150°C. The tile then was transferred to a convection oven where it was cured for 30 minutes at 200°C

### Comparative Example 7R

The powder composition of Formulation 1 was applied on a non-polished tile. Hereto, the tile was preheated for 10 minutes at 200°C and then transferred to a wooden support in order to have electrical insulation. Subsequently the powder was sprayed using a Gema Volstatic PCG1 without the application of an electrical field at a layer thickness of 160 micron. The tile then was transferred to a convection oven where it was cured for 30 minutes at 200°C.

All the tiles, after application and curing of the powders of Formulations 1 to 4 prove a very smooth finish without any craters and/or defects.

In the table below the coating evaluation of the coatings of Example 1 to 6 and the comparative example 7R is reproduced. In this table:
Column 1: indicates the identification number of the formulation
Column 2: indicates the 60° gloss, measured according to ASTM D523
Column 3: indicates the MEK resistance. The figures indicate the number of double rubs carried out until damaging of the coating starts.
Column 4: indicates the pencil hardness according to Scratch Hardness Tester according to Wolff Wilborn
Column 5: indicates the coating evaluation after a 16 hour staining with, respectively: ammonia (10% in water)/denaturated ethanol (48% in water)/acetone/red wine/mustard/stamp ink, accordingly DIN 68861 (Part 1).

Hereto the agent was placed upon the surface of the coated tile and covered with a Petri dish. The tile was then allowed to stand undisturbed for 16 hours. After exposure, the surface was cleaned and evaluated accordingly a rating of from 0 to 5 where: 0 means no changes/1 means minor changes in gloss or colour/2 means changes in gloss or colour but no surface damage/3 means major changes visible but no real damage of the surface/4 means major changes visible and damage of the surface/5 means most of the exposed surface is damaged.

| | Gloss, 60° | MEK-rubs | Pencil hardness | Stain resistance |
|---|---|---|---|---|
| Example 1 | 103 | 200 | 2H | 0/0/2/0/0/0 |
| Example 2 | 104 | 200 | 4H | 0/0/3/0/0/0 |
| Example 3 | 102 | 200 | 3H | 0/0/3/0/0/0 |
| Example 4 | 101 | 200 | 3H | 0/0/2/0/0/0 |
| Example 5 | 102 | 200 | 3H | 0/0/2/0/0/0 |
| Example 6 | 101 | 200 | 3H | 0/0/2/0/0/0 |
| Comparative Ex. 7R | 93 | 150 | HB | 1/1/4/0/2/1 |

From the table below it clearly appears that on polished tiles the application of an acrylic based topcoat proves good hardness and an outstanding stain and solvent resistance (MEKrubs)

The tile obtained from Comparative Example 7R showed a good result from decorative point of view; nevertheless the coating, once cured, showed insufficient solvent and stain resistance and hardness for being used as a useful enamel alternative.

## Claims

1. A process for coating ceramic substrates which process comprises applying a powder coating composition comprising at least one acrylic copolymer comprising carboxyl-, hydroxyl- and/or glycidyl-functional groups and at least one hardener having functional groups reactable with the acrylic copolymers' functional groups to the substrate and curing the applied composition.

2. The process according to claim 1 wherein the acrylic copolymer is a carboxyl functionalized acrylic copolymer which is prepared by using from 1 to 50 mole % of a carboxylic acid group containing monomer relative to the total number of moles of monomers and the hardener is selected from polyepoxy compounds, β-hydroxyalkylamide containing compounds and their mixtures.

3. The process according to claim 1 wherein the acrylic copolymer is an acrylic copolymer comprising hydroxyl functional groups prepared by using from 1 to 95 mole % of a hydroxyl group containing monomer relative to the total number of moles of monomers and the hardener is selected from blocked isocyanate crosslinking agents.

4. The process according to claim 1 wherein the acrylic copolymer is a glycidyl functionalized copolymer which is prepared by using from 10 to 90 mole % of a glycidyl group containing monomer relative to the total number of moles of monomers and the hardener is selected from polycarboxylic acids and/or polyanhydrides.

5. The process according to claim 1 wherein the ceramic substrate is first coated with at least one primer layer, by applying to the ceramic substrate a polyester powder coating composition comprising at least one polyester having carboxyl-and/or hydroxyl-functional groups and at least one hardener having functional groups reactable with the polyester functional groups, partially or completely curing the applied composition, after which the substrate is top-coated with the at powder coating composition comprising at least one acrylic copolymer and at least one hardener.

6. The process according to claim 5 wherein the polyester is prepared from a polyacid component comprising from 70 to 100 mole % of aromatic polycarboxylic acids and/or their anhydrides and from 0 to 30 mole % of aliphatic or cycloaliphatic polyacids and/or their anhydrides, and from a polyol component comprising from 70 to 100 mole % of a branched chain aliphatic diol and from 0 to 30 mole % of other aliphatic or cycloaliphatic polyols.

7. The process according to claim 5 wherein the polyester powder coating composition comprises from 30 to 97 % by weight of polyester, from 3 to 50 % by weight of hardener, from 0 to 50 % by weight of colorant and/or pigment and/or filler and from 0 to 10 % by weight of other additives.

8. The process according to claim 1 wherein the ceramic substrate is first preheated to a temperature above the glass transition temperature of the powder coating composition, after which the powder coating composition is applied to the substrate and the ceramic substrate containing the powder is heated to a temperature between 120 and 300°C for a curing time of from 1 to 60 minutes.

9. Process according to claim 8 wherein the powder coating composition is applied to the substrate without the use of an electrical field and by ensuring that the substrate is thermal and electrical insulated.

10. Ceramic substrates, especially tiles, comprising at least one layer obtained from a powder coating composition comprising a least one acrylic copolymer comprising carboxyl-, hydroxyl- and/or glycidyl-functional groups and at least one hardener having functional groups reactable with the acrylic copolymers' functional groups and optionally a least one primer layer obtained from a polyester powder coating composition comprising at least one carboxyl- and/or hydroxyl-functional polyester and at least one hardener having functional groups reactable with the polyesters' functional groups.
